# EUROPÄISCHE PATENTSCHRIFT

(11) **EP 0 796 182 B1**
(45) Veröffentlichungstag und Bekanntmachung des Hinweises auf die Patenterteilung: **10.03.1999**
(21) Anmeldenummer: 95936955.4
(22) Anmeldetag: 23.11.1995
(51) Int. Cl.: B60S 1/08

(54) **SCHALTUNGSANORDNUNG, INSBESONDERE FÜR EINE WISCHANLAGE FÜR KRAFTFAHRZEUGSCHEIBEN**
CIRCUIT, ESPECIALLY FOR A WIPER SYSTEM FOR MOTOR VEHICLE WINDSCREENS
CIRCUIT, NOTAMMENT POUR SYSTEME D'ESSUIE-GLACE DE PARE-BRISE D'AUTOMOBILE

(30) Priorität: 19.12.1994 DE 4445107
(43) Veröffentlichungstag der Anmeldung: 24.09.1997
(73) Patentinhaber: ROBERT BOSCH GMBH, 70442 Stuttgart (DE)
(72) Erfinder: HOG, Norbert, D-77815 Bühl (DE); PIENTKA, Rainer, D-77855 Achern (DE); MEIER, Hans, D-77833 Ottersweier (DE); RIEHL, Günther, D-77830 Bühlertal (DE); BLITZKE, Henry, D-77815 Bühl (DE)
(86) Internationale Anmeldenummer: DE9501636
(87) Internationale Veröffentlichungsnummer: WO9619366

(56) Entgegenhaltungen:
- US-A- 4 286 200
- US-A- 4 859 867
- US-A- 5 239 244

## Beschreibung

Die Erfindung betrifft eine Schaltungsanordnung, insbesondere für eine Wischanlage für Kraftfahr Zeugscheiben, nach dem Oberbegriff des Anspruchs 1. Eine derartige Schaltungsanordnung ist z.B. in der US-A-5 239 244 dargestellt.

### Stand der Technik

Es ist bekannt, in Kraftfahrzeugen Wischanlagen für Kraftfahrzeugscheiben einzusetzen, die einen elektrischen Wischermotor aufweisen. Zur Betätigung des Wischermotors sind Steuergeräte bekannt, die über sogenannte Regensensoren eine von außen auf das Kraftfahrzeug auftreffende Feuchtigkeitsmenge detektieren. In Abhängigkeit der Feuchtigkeitsmenge, das heißt der Stärke des Regens, stellt das Steuergerät unterschiedliche Steuersignale für den Wischermotor bereit. Dem Wischermotor ist hierzu eine Stufenschaltung vorgeschaltet, die eine unterschiedliche Zuschaltung des Wischermotors, beispielsweise mit zwei unterschiedlichen Geschwindigkeiten, ermöglicht. Über das Steuergerät und die Stufenschaltung wird der Wischermotor einerseits mit einer Spannungsquelle verbunden und andererseits eine Wicklungsumschaltung des Wischermotors realisiert, die eine unterschiedliche Wischergeschwindigkeit des Wischermotors gestattet.

Bei den bekannten Schaltungsanordnungen ist jedoch nachteilig, daß bei einem Ausfall des Steuergerätes eine Betätigung des Wischermotors und damit der Wischanlagen des Kraftfahrzeuges nicht mehr möglich ist. Fällt das Steuergerät beispielsweise während eines bestimmungsgemäßen Gebrauchs des Kraftfahrzeuges zu einer Zeit aus, in der es regnet, ist eine Betätigung der Wischanlage ausgeschlossen. Die Fahrt müßte somit bis zur Beendigung des Regens unterbrochen werden.

### Vorteile der Erfindung

Die erfindungsgemäße Schaltungsanordnung mit den im Anspruch 1 genannten Merkmalen bietet demgegenüber den Vorteil, daß auch bei Ausfall des Steuergerätes eine Betätigung der Wischanlage der Kraftfahrzeuge möglich ist. Dadurch, daß den Steuerausgängen des Steuergerätes ein Schaltmittel parallelgeschaltet ist, über das eine Spannungsquelle mit den den Ausgängen des Steuergerätes zugeordneten Eingängen der Stufenschaltung verbindbar ist, kann in einfacher Weise das defekte Steuergerät überbrückt werden, so daß eine Betätigung der Wischanlage möglich wird. Durch diese zusätzliche manuelle Eingriffsmöglichkeit in die Schaltungsanordnung zur Ansteuerung des Wischermotors kann ein Notlauf der Wischanlage bei ausgefallenem Steuergerät aufrechterhalten werden. Durch die hiermit erfolgte Sicherstellung der Wischerfunktion der Wischanlage kann beispielsweise eine auf Grund eines ausgefallenen Steuergerätes für die Wischanlage unterbrochene Fahrt fortgesetzt werden.

Vorteilhafte Ausgestaltungen der Erfindung ergeben sich aus den in den Unteransprüchen genannten Merkmalen.

### Zeichnung

Die Erfindung wird nachfolgend in Ausführungsbeispielen an Hand der zugehörigen Zeichnungen näher erläutert. Es zeigen:
- Figur 1: eine Schaltungsanordnung zur Sicherung eines einstufigen Notlaufs;
- Figur 2: eine Schaltungsanordnung zur Sicherung eines zweistufigen Notlaufs in einer ersten Ausführungsvariante und
- Figur 3: eine Schaltungsanordnung zur Sicherung eines zweistufigen Notlaufs in einer weiteren Ausführungsvariante.

### Beschreibung der Ausführungsbeispiele

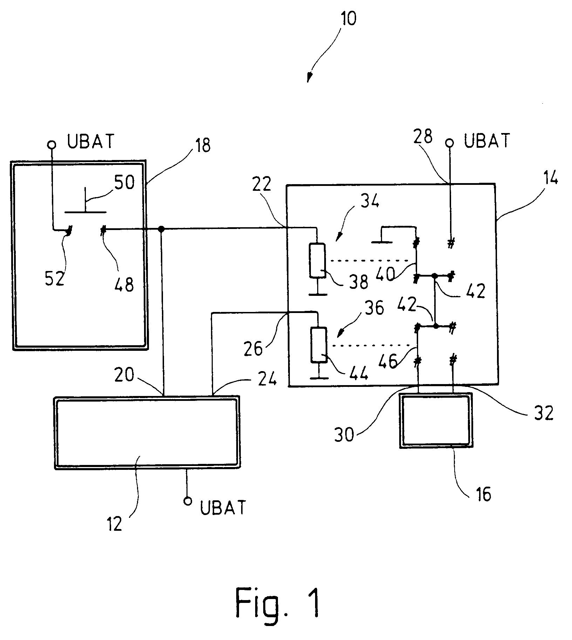

Figur 1 zeigt eine allgemein mit 10 bezeichnete Schaltungsanordnung für eine Wischanlage eines Kraftfahrzeuges. Die Schaltungsanordnung 10 besitzt ein Steuergerät 12, eine Stufenschaltung 14, einen Wischermotor 16 sowie ein Schaltmittel 18. Ein erster Ausgang 20 des Steuergerätes 12 ist mit einem ersten Eingang 22 der Stufenschaltung 14 verbunden. Ein zweiter Ausgang 24 des Steuergerätes 12 ist mit einem Zweiten Eingang 26 der Stufenschaltung 14 verbunden. Die Stufenschaltung 14 besitzt einen weiteren Eingang 28, der mit einer Spannungsquelle, vorzugsweise einer Kraftfahrzeugbatterie U_{bat}, verbunden ist. Zwei weitere Ausgänge 30 und 32 der Stufenschaltung 14 sind mit dem Wischermotor 16 verbunden. Der Wischermotor 16 ist mit unterschiedlichen Bürstenanordnungen versehen, die zur Erzeugung unterschiedlicher Drehzahlen des wischermotors 16 dienen. Eine erste Bürstenanordnung, beispielsweise für eine niedrigere Drehzahl, ist mit dem Ausgang 30 und eine zweite Bürstenanordnung, beispielsweise für eine höhere Drehzahl, ist mit dem Ausgang 32 der Stufenschaltung 14 verbunden.

Innerhalb der Stufenschaltung 14 ist ein erstes Schaltmittel, beispielsweise ein elekromagnetisches Relais 34 und ein zweites Schaltmittel, beispielsweise ebenfalls ein elektromagnetisches Relais 36, angeordnet. Die Erregerwicklung 38 des Relais 34 ist einerseits mit dem Eingang 22 der Stufenschaltung 14 und andererseits mit einem Massepotential verbunden. Ein Schaltkontakt 40 des Relais 38 verbindet in Ruhestellung einen Mittenkontakt 42 mit dem Massepotential. Eine Erregerwicklung 44 des zweiten Relais 36 ist mit dem zweiten Eingang 26 der Stufenschaltung 14 einerseits und mit dem Massepotential andererseits verbunden. Ein Schaltkontakt 46 des Relais 36 ist in Ruhestellung mit dem Mittenkontakt 42 und dem Ausgang 30 der Stufenschaltung 14 verbunden. Der erste Eingang 22 der Stufenschaltung 14 ist weiterhin mit einem ersten Kontakt 48 eines Schaltgliedes 50 des Schaltmittels 18 verbunden. Ein zweiter Kontakt 52 des Schaltgliedes 50 ist mit der Spannungsquelle U_{bat} verbunden. In Ruhestellung ist das Schaltglied 50 geöffnet, das heißt, die Kontakte 48 und 52 sind nicht miteinander verbunden.

Die in Figur 1 gezeigte Schaltungsanordnung übt folgende Funktion aus:

In Normalfunktion wird mittels des Steuergerätes 12, das eine hier nicht näher zu betrachtende Steuerschaltung aufweist, in Abhängigkeit eines äußeren Feuchtigkeitsanfalls am Kraftfahrzeug entweder der erste Ausgang 20 oder der Zweite Ausgang 24 mit der Spannungsquelle U_{bat} verbunden. Wird beispielsweise auf einen niedrigen Feuchtigkeitsbefall detektiert, liegt die Spannungsquelle an dem ersten Ausgang 20 an, so daß über die Verbindung zum ersten Eingang 22 der Stufenschaltung 14 die Erregerwicklung 38 des Relais 34 bestromt wird. Der Schaltkontakt 40 stellt daraufhin eine Verbindung zwischen dem Mittenkontakt 42 und der Spannungsquelle U_{bat} her, die an dem Eingang 28 der Stufenschaltung 14 angeschlossen ist. Über den in Ruhestellung befindlichen Schaltkontakt 46 des zweiten Relais 36 wird eine Betriebsspannung U_{b} somit auf den ersten Ausgang 30 der Stufenschaltung durchgeschaltet. Die mit dem Ausgang 30 verbundene erste Schaltstufe des Wischermotors 16 wird somit bestromt, so daß dieser mit seiner hier angenommenen niederen Wischergeschwindigkeit die Wischanlage des Kraftfahrzeugs betätigt.

Für den Fall, daß der äußere Feuchtigkeitsanfall an dem Kraftfahrzeug größer wird, verbindet das Steuergerät 12 die Spannungsquelle U_{bat} gleichzeitig mit dem ersten Ausgang 20 und dem zweiten Ausgang 24. Über die Verbindung des zweiten Eingangs 26 der Stufenschaltung 14 mit dem zweiten Ausgang 24 des Steuergerätes 12 wird die Erregerwicklung 44 des Relais 36 bestromt. Hierauf verbindet der Schaltkontakt 46 des Relais 36 den Mittenkontakt 42 mit dem Ausgang 32 der Stufenschaltung 14. Durch diese Umschaltung liegt nunmehr über den Eingang 28, den Schaltkontakt 40 des Relais 34 und dem Schaltkontakt 46 des Relais 36 die zweite Schaltstufe des Wischermotors 10 an der Spannungsquelle U_{bat}. Hiermit wird in dem angenommenen Beispiel eine höhere Wischergeschwindigkeit für die Wischanlage des Kraftfahrzeuges bereitgestellt.

Für den Fall, daß das Steuergerät 12 aus irgendeinem Grunde ausfällt, beispielsweise durch einen Defekt der in dem Steuergerät 12 vorhandenen Steuerschaltung oder einen Defekt der den äußeren Feuchtigkeitsanfall detektierenden Sensoren, sind die Relais 34 und 36 von jeder Möglichkeit der Verbindung der Spannungsquelle U_{bat} getrennt, so daß eine Funktion des Wischermotors 16 nicht mehr möglich ist.

Für diesen Störfall kann das Schaltmittel 18, das vorzugsweise als Lenkstockschalter in einem Kraftfahrzeug ausgebildet ist, durch Betätigen des Schaltgliedes 50 die Kontakte 48 und 52 miteinander verbinden, so daß die Spannungsquelle U_{bat} mit dem Eingang 22 der Stufenschaltung 14 verbunden ist. Hierdurch kann wiederum die Erregerwicklung 38 des Relais 34 bestromt werden, so daß der Schaltkontakt 40 eine Verbindung über den Eingang 28 der Spannungsquelle U_{bat} mit der ersten Schaltstufe des Wischermotors 16 herstellt. Der Wischermotor 16 kann somit trotz Aus falls des Steuergerätes 12 zumindest in seiner ersten Schaltstufe betrieben werden, so daß eine Notlauffunktion gewährleistet ist.

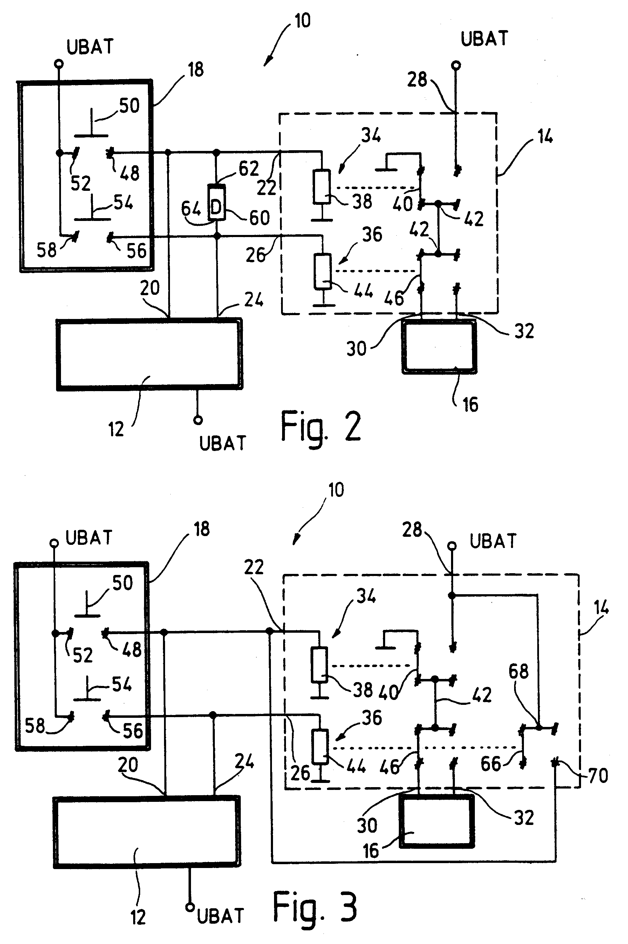

Figur 2 zeigt eine Weiterbildung der in Figur 1 gezeigten Schaltungsanordnung 10, wobei gleiche Teile mit gleichen Bezugszeichen versehen und nicht nochmals erläutert sind. Zusätzlich zu der in Figur 1 gezeigten Schaltungsanordnung 10 besitzt hier das Schaltmittel 18 ein zweites Schaltglied 54. Ein Kontakt 56 des Schaltgliedes 54 ist mit dem zweiten Eingang 26 der Stufenschaltung 14 verbunden. Ein weiterer Kontakt 58 des Schaltgliedes 54 ist mit der Spannungsquelle U_{bat} verbunden. Zwischen den Eingängen 22 und 26 der Stufenschaltung 14 ist eine Diode 60 geschaltet, deren Kathode 62 mit dem Eingang 22 und deren Anode 64 mit dem Eingang 26 verbunden ist.

Die in Figur 2 gezeigte Schaltungsanordnung 10 übt folgende Funktion aus:

Die Normalfunktion entspricht der in Figur 1 gezeigten Schaltungsanordnung 10 und soll hier nicht nochmals erläutert werden. Im Falle eines Ausfalls des Steuergerätes 12 ist hier wiederum ebenfalls über das Schaltglied 50 eine Bestromung der Erregerwicklung 38 des Relais 34 möglich, so daß der Wischermotor 16 mit seiner ersten Schaltstufe, die über den Ausgang 30 der Stufenschaltung 14 angesteuert wird, betreibbar ist. Soll jedoch der Wischermotor 10 auch in der hier betroffenen Notlaufsituation, in seiner zweiten Schaltstufe, im Beispiel also mit der schneller laufenden Wischergeschwindigkeit betrieben werden, ist dies über eine Weiterschaltung des Schaltmittels 18 auf dessen Schaltglied 54 möglich. Bei Betätigung des Schaltgliedes 54 sind die Kontakte 56 und 58 miteinander verbunden, so daß die Spannungsquelle U_{bat} auf den zweiten Eingang 26 der Stufenschaltung 14 durchgeschaltet ist. Gleichzeitig ist die Diode 60 auf Durchlaß geschaltet, so daß über die Diode 60 die Spannungsquelle U_{bat} ebenfalls mit dem ersten Eingang 22 der Stufenschaltung 14 verbunden ist. In diesem Falle arbeitet die Stufenschaltung 14 wie im regulären Betrieb, das heißt, die Schaltkontakte 40 bzw. 46 sind so geschaltet, daS eine Verbindung zwischen dem Eingang 28 und dem Ausgang 32 der Stufenschaltung 14 geschalten ist, so daß die zweite Schaltstufe, also die für eine höhere Wischergeschwindigkeit, des Wischermotors 16 mit der Spannungsquelle U_{bat} verbunden ist.

Es ist also mittels des Schaltmittels 18 eine Notlauffunktion für den Wischermotor 16 sowohl in dessen erster Schaltstufe als auch in dessen zweiter Schaltstufe möglich. Die zwischen den Eingängen 22 und 26 geschaltete Diode 60 gewährleistet, daß bei betätigtem Schaltglied 50 die Betriebsspannung U_{b} der Spannungsquelle U_{bat} für den zweiten Eingang 26 der Stufenschaltung 14 gesperrt ist. Diese liegt somit nur am ersten Eingang 22 an. Im Falle der Betätigung des Schaltgliedes 54 ist jedoch die Diode 60 auf Durchlaß geschaltet, so daß die Betriebsspannung U_{b} gleichzeitig an den Eingängen 22 und 26 anliegen kann.

Figur 3 zeigt eine weitere Variante der Schaltungsanordnung 10, bei der eine Notlauffunktion des Wischermotors 16 für beide Schaltstufen realisiert ist. Gleiche Teile wie in den vorhergehenden Figuren sind wiederum mit gleichen Bezugszeichen versehen und nicht nochmals erläutert. Bei der in Figur 3 gezeigten Schaltungsanordnung 10 besitzt das Relais 36 einen weiteren Schaltkontakt 66, der als Schließer ausgebildet ist. Ein Ruhekontakt 68 des Schaltkontaktes 66 ist mit dem Eingang 28 der Stufenschaltung 14 und somit mit der Spannungsquelle U_{bat} verbunden. Der Schließkontakt 70 des Schaltkontaktes 66 ist mit dem ersten Eingang 22 der Stufenschaltung 14 verbunden. Durch die zusätzliche Anordnung des Schaltkontaktes 66 des Relais 36 wird erreicht, daß bei Betätigung des Schaltgliedes 54 des Schaltmittels 18 die zweite Schaltstufe des Wischermotors 16 zugeschaltet werden kann. Über das geschlossene Schaltglied 54 wird die Spannungsquelle U_{bat} mit der Erregerwicklung 44 des Relais 36 verbunden. Der Schaltkontakt 46 verbindet hierauf den Mittenkontakt 42 mit dem Ausgang 32 der Stufenschaltung 14. Gleichzeitig verbindet der Schaltkontakt 66 den Ruhekontakt 68 mit dem Schließkontakt 70, so daß der erste Eingang 22 mit dem Eingang 28 der Stufenschaltung 14 verbunden ist und hier somit ebenfalls die Betriebsspannung U_{b} der Spannungsquelle U_{bat} anliegt. Der Schaltkontakt 40 verbindet hieraufhin den Eingang 28 mit dem Mittenkontakt 42, so daß die Betriebsspannung U_{b} am Ausgang 32 der Stufenschaltung 14 anliegt. Durch diese einfache Relaisschaltung wird in Verbindung mit dem Schaltmittel 18 eine Notlauffunktion des Wischermotors 10 für dessen beide Schaltstufen ermöglicht.

An Stelle des zusätzlichen Schaltkontaktes 66 des Relais 36 kann ein drittes Relais vorgesehen sein, dessen Erregerwicklung parallel zu der Erregerwicklung 44 des Relais 36 geschaltet ist. Dieses zusätzliche Relais würde dann die Verbindung des Eingangs 28 mit dem Eingang 22 der Stufenschaltung 14 realisieren.

## Patentansprüche

1. Schaltungsanordnung (10), insbesondere für eine Wischanlage für Kraftfahrzeugscheiben, mit einem elektrischen Wischermotor (16) und einer über ein Steuergerät (12) ansteuerbaren Stufenschaltung (14) für den Wischermotor (16), wobei wenigstens ein einer bestimmten Wischergeschwindigkeit zugeordneter Ausgang (20, 24) des Steuergerätes (12) mit wenigstens einem diese Wischergeschwindigkeit festlegenden Eingang (22, 26) der Stufenschaltung (14) verbunden ist, dadurch gekennzeichnet, daß den Ausgängen (20, 24) des Steuergerätes (12) ein Schaltmittel (18) parallelgeschaltet ist, über das eine Spannungsquelle (U_{bat}) mit den den Ausgängen (20, 24) des Steuergerätes (12) zugeordneten Eingängen (22, 26) der Stufenschaltung (14) verbindbar ist, daß die Stufenschaltung zwei Schaltmittel (34, 36) aufweist, die über die beiden Eingänge (22, 26) ansteuerbar sind, daß das mit dem ersten Eingang (22) der Stufenschaltung (14) angesteuerte Schaltmittel (34) eine Verbindung mit der Spannungsquelle (U_{bat}) herstellt und daß das zweite Schaltmittel (36) den Ausgang des ersten Schaltmittels (34) mit einem von zwei Eingängen des Wischermotors verbindet.

2. Schaltungsanordnung nach Anspruch 1, **dadurch gekennzeichnet**, daß das Schaltmittel (18) eine der Schaltstufen der Stufenschaltung (14) entsprechende Anzahl von Schaltgliedern (50, 54) aufweist.

3. Schaltungsanordnung nach einem der vorhergehenden Ansprüche, **dadurch gekennzeichnet**, daß jedes Schaltglied (50, 54) des Schaltmittels (18) parallel zu dem jeweils zugeordneten Ausgang (20, 24) des Steuergerätes (12) geschaltet ist.

4. Schaltungsanordnung nach einem der vorhergehenden Ansprüche, **dadurch gekennzeichnet**, daß bei Betätigung des ersten Schaltgliedes (50) des Schaltmittels (18) der erste Eingang (22) der Stufenschaltung (14) mit der Spannungsquelle (U_{bat}) verbindbar ist.

5. Schaltungsanordnung nach einem der vorhergehenden Ansprüche, **dadurch gekennzeichnet**, daß bei Betätigung des zweiten Schaltgliedes (54) des Schaltmittels (18) alle Eingänge (22, 26) der Stufenschaltung (14) mit der Spannungsquelle (U_{bat}) verbindbar sind.

6. Schaltungsanordnung nach Anspruch 5, **dadurch gekennzeichnet**, daß die Eingänge (22, 26) der Stufenschaltung (14) über eine Diode (60) verbunden sind, wobei eine Kathode (62) der Diode (60) mit dem ersten Eingang (22) und eine Anode (64) der Diode (60) mit dem zweiten Eingang (26) verbunden ist.

7. Schaltungsanordnung nach Anspruch 5, **dadurch gekennzeichnet**, daß der erste Eingang (22) mit der Spannungsquelle (U_{bat}) über ein dem zweiten Eingang (26) der Stufenschaltung (14) zugeordnetes Schaltelement (36) verbindbar ist.

8. Schaltungsanordnung nach Anspruch 7, **dadurch gekennzeichnet**, daß das Schaltelement ein Schließkontakt (66) eines mit dem zweiten Eingang (26) verbundenen Relais (36) ist.

9. Schaltungsanordnung nach einem der vorhergehenden Ansprüche, **dadurch gekennzeichnet**, daß das Schaltmittel (18) ein Lenkstockschalter ist.

## Claims

1. Circuit arrangement (10), in particular for a wiper system for motor vehicle windscreens, having an electric wiper motor (16) and a step circuit (14), which can be driven by a control unit (12), for the wiper motor (16), at least one output (20, 24), assigned to a specific wiper speed, of the control unit (12) being connected to at least one input (22, 26) of the step circuit (14) which fixes this wiper speed, characterized in that connected in parallel with the outputs (20, 24) of the control unit (12) is a switching means (18) via which a voltage source (U_{bat}) can be connected to the inputs (22, 26), assigned to the outputs (20, 24) of the control unit (12), of the step circuit (14), in that the step circuit has two switching means (34, 36) which can be driven via the two inputs (22, 26), in that the switching means (34) driven by the first input (22) of the step circuit (14) produces a connection to the voltage source (U_{bat}), and in that the second switching means (36) connects the output of the first switching means (34) to one of two inputs of the wiper motor.

2. Circuit arrangement according to Claim 1, characterized in that the switching means (18) has a number of switching devices (50, 54) which corresponds to the switching steps of the step circuit (14).

3. Circuit arrangement according to one of the preceding claims, characterized in that each switching device (50, 54) of the switching means (18) is connected in parallel with the respectively assigned output (20, 24) of the control unit (12).

4. Circuit arrangement according to one of the preceding claims, characterized in that upon actuation of the first switching device (50) of the switching means (18), the first input (22) of the step circuit (14) can be connected to the voltage source (U_{bat}).

5. Circuit arrangement according to one of the preceding claims, characterized in that upon actuation of the second switching device (54) of the switching means (18), all the inputs (22, 26) of the step circuit (14) can be connected to the voltage source (U_{bat}).

6. Circuit arrangement according to Claim 5, characterized in that the inputs (22, 26) of the step circuit (14) are connected via a diode (60), a cathode (62) of the diode (60) being connected to the first input (22), and an anode (64) of the diode (60) being connected to the second input (26).

7. Circuit arrangement according to Claim 5, characterized in that the first input (22) can be connected to the voltage source (U_{bat}) via a switching element (36) assigned to the second input (26) of the step circuit (14).

8. Circuit arrangement according to Claim 7, characterized in that the switching element is a make contact (66) of a relay (36) connected to the second input (26).

9. Circuit arrangement according to one of the preceding claims, characterized in that the switching means (18) is a steering column switch.

## Revendications

1. Circuit (10) notamment pour une installation d'essuieglace de pare-brise de véhicule automobile comprenant un moteur électrique (16) d'entraînement et un circuit étagé (14) commandé par un appareil de commande (12) pour le moteur d'essuie-glace (16),
au moins une sortie (20, 24) associée à une certaine vitesse d'essuyage de l'appareil de commande (12) étant reliée à au moins une entrée (22, 26) fixant cette vitesse d'essuyage pour le circuit étagé (14),
caractérisé en ce qu'
- un moyen de commutation (18) est branché en parallèle sur les sorties (20, 24) de l'appareil de commande (12), moyen qui relie une source de tension (U_{bat}) aux entrées (22, 26) du circuit étagé (14) associées aux sorties (20, 24) de l'appareil de commande (12),
- le circuit étagé comprend deux moyens de commutation (34, 36) commandés par les deux entrées (22, 26),
- le moyen de commutation (34) commandé par la première entrée (22) du circuit étagé (14) réalisant une liaison avec la source de tension (U_{bat}) et
- le second moyen de commutation (36) reliant la sortie du premier moyen de commutation (34) à l'une des deux entrées du moteur d'essuie-glace.

2. Circuit selon la revendication 1,
caractérisé en ce que
le moyen de commutation (18) comporte un nombre d'éléments de commutation (50, 54) correspondant aux étages de commutation du circuit étagé (14).

3. Circuit selon l'une des revendications précédentes,
caractérisé en ce que
chaque élément de commutation (50, 54) du moyen de commutation (18) est branché en parallèle à la sortie correspondante (20, 24) de l'appareil de commande (12).

4. Circuit selon l'une quelconque des revendications précédentes,
caractérisé en ce qu'
en actionnant le premier moyen de commutation (50) du moyen de commutation (18), on relie la première entrée (22) du circuit étagé (14) à la source de tension (U_{bat}).

5. Circuit selon l'une des revendications précédentes,
caractérisé en ce qu'
en actionnant le second élément de commutation (54) du moyen de commutation (18), on relie toutes les entrées (22, 26) du circuit étagé (14) à la source de tension (U_{bat}).

6. Circuit la revendication 5,
caractérisé en ce que
les entrées (22, 26) du circuit étagé (14) sont reliées par une diode (60), la cathode (62) de la diode (60) étant reliée à la première entrée (22 et son anode (64) à la seconde entrée (26).

7. Circuit selon la revendication 5,
caractérisé en ce que
la première entrée (22) est reliée à la source de tension (U_{bat}) par l'intermédiaire d'un élément de commutation (36) associé à la seconde entrée (26) du circuit étagé (14).

8. Circuit selon la revendication 7,
caractérisé en ce que
l'élément de commutation est un contact de fermeture (66) d'un relais (36) relié à la seconde entrée (26).

9. Circuit selon l'une quelconque des revendications précédentes,
caractérisé en ce que
le moyen de commutation (18) est un interrupteur situé sur la colonne de direction du véhicule.
